Europäisches Patentamt

European Patent Office

Office européen des brevets

(11) Publication number: **0 498 383 A2**

# EUROPEAN PATENT APPLICATION

(21) Application number: **92101870.1**

(22) Date of filing: **05.02.92**

(51) Int. Cl.⁵: **B32B 27/32**, B32B 27/30,
B32B 5/18, B32B 15/08,
B32B 17/10, B32B 18/00,
B29C 39/12, //B29K23:00

(30) Priority: **06.02.91 JP 35036/91**

(43) Date of publication of application:
**12.08.92 Bulletin 92/33**

(84) Designated Contracting States:
**BE DE DK FR GB IT NL SE**

(71) Applicant: **NIPPON ZEON CO., LTD.**
**6-1, Marunouchi 2-chome**
**Chiyoda-ku Tokyo 100(JP)**

(72) Inventor: **Torii, Masao**
**611, Sasaoki**
**Kurashiki-shi, Okayama(JP)**
Inventor: **Chono, Koji**
**1410-13, Nakashima**
**Kurashiki-shi, Okayama(JP)**
Inventor: **Yamato, Motoyuki**
**2-232,2-21, Koma, Ooiso-cho**
**Naka-gun, Kanagawa(JP)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) **Composite articles and method therefor.**

(57) A method of making an integrally molded composite article composed of a ring-opened polynorbornene matrix and a compatibilized laminate and/or a core component is disclosed. Laminate and/or core components that have low adhesion to polynorbornene or that interfere with the ring-opening polymerization of norbornene monomers are compatibilized by wrapping at least a portion of their surface with an inert polymer film. The polymer film enhances adhesion and prevents the interaction of deleterious functionalities on the laminate and/or core components with a reactive norbornene-type monomer solution.

EP 0 498 383 A2

# BACKGROUND OF THE INVENTION

## 1. Technical Field

This invention relates to polynorbornene based composite articles and to methods of manufacturing same. Particularly, this invention pertains to a method for manufacturing composite articles composed of norbornene based polymers and various structural components that are inherently incompatible therewith. More particularly, the method of the present invention pertains to the bulk polymerization by the metathesis ring-opening of a norbornene type monomer in the presence of a compatibilized structural component or lamina.

## 2. State of the Art

A laminated plastic composite material made of a slightly foamed or nonfoamed plastic core sandwiched between a metal or hard plastic skin has improved impact resistance and is light in weight. For these reasons, such materials have been widely used for automobile bodies, building panels, and in the superstructure of ships. Conventionally, these laminated sheet materials have been prepared by adhesive bonding and hot-pressing, which have led to some problems in productivity.

To eliminate productivity problems, it has been proposed to inject a reaction solution consisting of a norbornene based monomer and a metathesis catalyst system between the skin and core of a panel and bulk polymerize the solution to obtain a plastic composite as disclosed in Japanese provisional publication patent 62-122718. A plastic laminated panel is produced quite easily in accordance with this method as compared to laminates prepared by conventional methods. However, the product obtained by this method has its drawbacks in that the polynorbornene does not adhere satisfactorily to the core or skin material. Hence, the performance of the laminated panel so produced is not as expected. One of the causes of the unacceptable adhesion is that metals often have on their surfaces materials which interferes with ring-opening polymerization.

Other methods have been suggested for the manufacture of polynorbornene based composite materials. Japanese provisional patent publication 1-316262 discloses a method for the manufacture of a composite material by forming an olefinic polymer or hydrocarbon based thermoplastic elastomer layer on a polynorbornene based substrate. Japanese provisional patent publication 3-69322 discloses a method for producing an integrally molded composite article comprising a weather resistant skin formed on a polynorbornene based substrate. The article is formed in situ by applying a weather resistant film-forming olefinic polymer to the inside of a mold and subsequently feeding a bulk polymerizable reaction solution comprising a norbornene monomer into the mold and polymerizing the monomer in the mold. The composite materials so produced have improved interfacial adhesion, surface colorability, weatherability, and are free of surface defects. However, since the surface layer is a polyolefin, the hardness and coatability of the composite are unsatisfactory.

When the bulk ring-opening polymerization of norbornene monomers is carried out in a mold cavity containing a polyurethane foam, the surface of the foam is attacked or damaged by the metathesis catalyst. Consequently, unreacted monomer remains on the polynorbornene/foam interface which deleteriously affects the adhesion of the polynorbornene polymer to the polyurethane foam. The poor adhesion at this interface allows tiny gaps to form between the foamed material and the polynorbornene. These gaps allow undesirable odors generated by the unreacted monomer to emanate from the article. The gaps also provide routes for moisture to infiltrate into the article, ultimately leading to its deterioration.

In copending U.S. application Serial No. 07/606,665, filed on October 31, 1990, it is disclosed that a lamina layer or structural component that contains polymerization inhibitors can be coated with an inert solvent borne polymer coating. The inert coating prevents any polymerization inhibitors on the lamina or structural component from interfering with the metathesis ring-opening polymerization reaction.

In the present invention it has been found that an inert polymer film or interlayer could be applied to the structural component or lamina in place of the solvent borne polymer coating.

# SUMMARY OF THE INVENTION

A primary object of this invention is to provide a method for the manufacture of integrally molded polynorbornene based composite materials having compatible structural components.

It is a further object of this invention to improve the adhesion of structural or lamina components to a polynorbornene matrix in forming composite articles.

It is another object of this invention to provide polynorbornene composite materials without interface defects.

It is still another object of this invention to provide an odor-free polynorbornene based composite material which has good functional and decorative properties.

These and other objects of the present invention are accomplished by bulk polymerizing a reac-

2

tive monomer solution comprising a norbornene monomer(s) and a metathesis catalyst system in a mold containing a structural component or lamina that has been modified with an inert polymer film or interlayer on at least a surface thereof. The inert film on the structural component is a polymer that is inert to the monomer(s) and the metathesis catalyst.

The structural component or lamina is covered on all of the surfaces that will be in contact with the reactive monomer solution.

## DETAILED DESCRIPTION

**Matrix Material**

The matrix material of the invention is polynorbornene obtained by bulk ring-opening polymerization of a reaction solution containing at least one norbornene monomer and a metathesis catalyst in a mold cavity containing a structural component covered on at least a surface thereof with an inert polymer film.

Preferably, the polynorbornene based composite article of the present invention is manufactured by a reaction injection molding (RIM) method in which at least two low viscosity reactive monomer solutions are mixed and injected into a mold cavity containing the structural component or lamina (lamina for convenience). The mixed reaction solution is then polymerized in the mold. One of the reaction solutions contain an activating agent and norbornene monomer(s). The other reaction solution contains a metathesis catalyst and norbornene monomer(s). The two solutions are mixed and injected into a mold and allowed to undergo bulk ring-opening polymerization in order to obtain an integrally molded polynorbornene composite product.

The molding of the polynorbornene composite product by the RIM method has lower injection pressure requirements than conventional thermoplastic injection molding methods. Accordingly, inexpensive and lightweight molds can be used. Also, this method is suitable for the manufacture of an insert-containing (e.g., core containing) molded product, a laminated molded product, a large molded product, or a complex shaped molded product, due to the excellent fluidity of the starting material in the mold cavity.

Any norbornene monomer can be utilized as the matrix material in this invention, as long as it has a norbornene ring. Norbornene polymers that are manufactured using polycyclic norbornene monomers with three or more rings are particularly preferred. Satisfactory heat resistance for use in composite materials is obtained when norbornene monomers with three or more rings are employed because a polymer with a high heat deformation temperature is obtained. Moreover, the polymer that is produced by this invention can be a thermosetting polymer. In order to obtain a thermosetting polymer, the total monomer should consist of at least 10 wt %, preferably 30 wt % or more, of crosslinkable monomer.

Examples of the norbornene monomers are bicyclic monomers, such as norbornene and norbornadiene, tricyclic monomers, such as dicyclopentadiene, dihydrodicyclopentadiene, etc., tetracyclic monomers, such as tetracyclododecene, etc., pentacyclic monomers, such as tricyclopentadiene, etc., heptacyclic monomers, such as tetracyclopentadiene, etc., their alkyl substituents (for instance, methyl, ethyl, propyl, and butyl substituents), alkenyl substituents (for instance, vinyl substituents), alkylidene substituents (for instance, ethylidene substituents), aryl substituents (for instance, phenyl, tolyl, and naphthyl substituents), and polar substituents (for instance, ester, ether, nitrile, and halogen substituents). Of these, the tricyclic, tetracyclic and pentacyclic monomers are preferred because they are easily obtained, have excellent reactivity, and polymerize to heat resistant polymers.

The crosslinkable monomer is a polycyclic norbornene monomer that has two or more reactive double bonds. Actual examples are dicyclopentadiene, tricyclopentadiene, tetracyclopentadiene, etc. It is not necessary to use special crosslinkable monomers when the crosslinkable monomer is the same as the norbornene monomer.

In addition, monocyclic cycloolefins, such as cyclobutene, cyclopentene, cyclopentadiene, cyclooctene, and cyclododecene, and the like, that can be polymerized via ring-opening with one or more of the aforementioned norbornene monomers also can be used so long as the physical properties of the polymer matrix are not adversely affected.

**Catalyst System**

The catalyst system that is employed comprises any metathesis catalyst so long as it can be employed as a catalyst for the ring-opening polymerization of norbornene monomers and a cocatalyst. Examples of metathesis catalysts are the halides, oxyhalides, oxides, organic ammonium salts, etc., of tungsten, molybdenum, tantalum, and the like. Examples of cocatalysts (activators) are alkyl aluminum halide, alkoxyalkyl aluminum halide, aryloxyalkyl aluminum halide, organotin compounds, etc.

The metathesis catalyst is normally used in the range of approximately 0.01 to 50 millimoles, preferably 0.1 to 20 millimoles, per mole of norbornene monomer. The activator (cocatalyst) is used within a range of preferably 1 to 10 (molar ratio) per catalyst component.

It is preferred that the metathesis catalyst and activator be dissolved in the monomer. However as long as it is within a range where there is essentially no loss of properties in the product, the catalyst and activator can also be suspended or dissolved in a trace of solvent.

**Structural Component**

In the manufacture of the integrally molded composite material of the present invention, a material having a surface with no inherent bond forming capacity (adhesion) with the polynorbornene matrix can be used as the structural component, e.g., metal, glass, ceramic, plastics, and the like.

Advantageously, any material having a surface which deactivates a metathesis catalyst system or interferes with ring-opening polymerization can also be used as the structural component or lamina. Materials that interfere with ring-opening polymerization are those materials having a hydroxy, carboxyl, or amino functionality on their surfaces. Examples are epoxy resins, phenolic resins, unsaturated polyesters, air-exposed (e.g., oxidized) polynorbornenes, cellophane, acrylic resins, polyamides, polycarbonates, polyurethanes, paper, wood, gypsum, concrete, etc. When necessary, the structural components or lamina can be reinforced with glass and/or carbon fibers.

There is no limit to the shape of the structural component. It can be in the shape of a sheet, plate, rod, foam, beads, flakes, particles, fabric, or any other three-dimensional shape. Foamed components can be integrated with gas-barrier films or metal coatings for various functions.

The structural components can be laminated to the surface of the polynorbornene matrix, laminated between layers of polynorbornene matrix or can be embedded within the polynorbornene matrix.

**Inert Film**

The polymer films that are utilized to cover the structural components or lamina are inert to ring-opening polymerization. By polymer film is meant that the polymer is in sheet-like form and is not intended to include coatings. The polymer films of this invention is capable of being wrapped around the structural component and is capable of being applied (in sheet form) to a lamina surface to function as an interlayer between the polynorbornene matrix and the lamina. Suitable polymers are polyolefins such as high density polyethylene (PE), medium density PE, low density PE, ethylene-propylene copolymer, ethylene-butene-1 copolymer, polypropylene (PP), polybutene-1, polypentene-1, poly(4-methyl pentene-1), or polystyrene; an olefin monomer-ester monomer copolymer such as ethylene-vinyl acetate copolymer or ethylene-acrylic acid ester copolymer; a copolymer of styrene and maleic anhydride; an ester-type polymer such as polyvinyl acetate, polymethyl methacrylate, polyhexyl methacrylate or halogenated polymers such as polyvinyl chloride, and mixtures thereof.

Additionally, any block copolymer from a conjugated diene obtained from an aromatic vinyl compound such as styrene (S), isoprene (I), butadiene (B) can also be used. Examples are S-I type, S-B type, S-I-S type, S-B-S type, and S-I-S-I-S type block copolymers and their hydrides; unvulcanized rubber such as ethylene-propylene rubber (EPR), ethylene-propylene-diene terpolymer (EPDM), polybutadiene, polyisoprene, styrene-butadiene copolymer, chloroprene rubber, or butyl rubber; and elastomers of these rubber mixtures.

The forgoing polymers can be formed into sheeting, stretched films, unstretched films, thermally shrinkable films, laminated films, and the like by conventional techniques such as calendaring, extrusion, and blow molding. The thickness of the film or sheet can be varied as desired, however, the thickness can range from about 1 to about 3000 $\mu$m and preferably from about 5 to about 500 $\mu$m.

The following modifying agents can be added to the film system so long as they do not interfere with the ring-opening polymerization reaction. For example, fillers such as titanium oxide, calcium carbonate, aluminum hydroxide, talc, and carbon black; coloring agents such as pigments or dies; antioxidants; UV absorbing agents; antifogging agents; antistatic agents; adhesion promoters such as a petroleum resin which is obtained by thermopolymerization of dicyclopentadiene with or without the presence of styrene or vinyl acetate; or hydrated petroleum resin to color and/or to improve weather resistance.

According to this invention, any structural component or lamina part that is in contact with the ring-opening polymerization solution can be wrapped with the above-described polymer films (at least in the area(s) that are in contact with the reaction solution). Alternatively, in the case of lamellar configurations, an inert polymer film interlayer can be used between the lamina and the norbornene monomer reaction solution. The interlayer should be coextensive with the surface area of the lamina so that only the film contacts with the monomer reaction solution.

In preparing a structural component or lamina which is to be embedded in the monomer reaction solution, the entire surface of the component is covered with the inert film. In preparing a lamina component, only the side of the lamina that is in contact with the matrix forming material is covered (e.g. an interlayer applied). Where the laminate is sandwiched between layers of matrix material, all sides of the lamina are covered with an interlayer film.

When covering the structural component with the inert polymer film, the structural component and the film should be capable of forming an adherent bond. However, if the two are not adherent then the surface of the structural component can be coated with a base adhesive material such as epoxy resin, urethane base adhesive, polyester base adhesive, phenolic resin base adhesive, melamine base adhesive, or polyamide base adhesive. The next film is then applied over the structural component/lamina.

Methods of covering the structural component or lamina with the inert polymer film include wrapping, vacuum sealing, applying a heat shrinking film, thermal fusion bonding of a component wrapped or laminated with the film, adhesive bonding, and the like. Among these, wrapping is the most preferable method. Vacuum sealing or the heat shrinking application method is advantageous in that the film can be made to conform to the intricate shapes of the structural component. By utilizing the thermal fusion method, the film can be integrally formed with the underlying structural component. This is especially advantageous when the underlying structural component is a plastic.

## Composite Manufacture

The film covered structural component element is placed in a mold and then the reactive monomer solution is conveyed or injected into the mold. The specified bulk ring-opening polymerization molding conditions are then initiated.

The covered structural component(s) can be placed in a mold against the mold cavity wall (e.g., surface lamina configuration), can be stacked with spacers between successive lamina layers (e.g., lamellar configuration), or can be propped up in the mold with the aid of a spacer(s) (e.g., core configuration). The spacers can be of any configuration so long as they provide the desired gap between laminate layers. The spacers can be separate elements or can be integrally molded into the lamina configuration. The spacer element(s) can be adhesively adhered to the laminate/structural component surface or can be held in place by the inert polymer film.

Molding of the polynorbornene composite products of the present invention can be carried out by reaction injection molding (RIM) in which a reaction solution is fed into a mold and allowed to polymerize (via bulk ring-opening polymerization). In a solution feeding method, at least two reaction solutions are mixed instantaneously in the mixing head of a RIM apparatus, and then conveyed into a preheated mold. The reaction solution can be conveyed to the mold in one shot or in several shots. These operations are generally carried out under an inert gas atmosphere. The pressure in the mold is atmospheric to 50 kg/cm$^2$, preferably 0.1-5 kg/cm$^2$.

## Molding Conditions

In the preferred method for manufacturing polynorbornene polymers, the norbornene monomer is divided into two solutions, which are then placed in separate vessels. A metathesis catalyst is added to one vessel, while an activator is added to the other vessel so that two stable reaction solutions are prepared. These two reaction solutions are mixed and then injected into a mold or frame of the desired size and configuration. Ring-opening polymerization by the bulk method is then performed.

The mold temperature is normally 30°C or more, preferably 40 to 200°C, and most preferably, 50 to 130°C. The components that are used in the polymerization reaction should be stored and used in an inert gas atmosphere, such as nitrogen.

The mold material can be metal, resin, wood, plastic, etc.

Additives such as antioxidants, fillers, reinforcers, foaming agents, dyes, coloring agents, elastomers, etc., can be added to the polynorbornene resin. These additives are normally dissolved or dispersed in the reaction solution, but there are cases where they are placed inside the mold.

Foaming agents can be added to the reaction solution, which is then injected into the mold, when it is desired to have a foamed matrix material. Preferred foaming agents are usually liquids. Examples are organic compounds with low boiling points that easily evaporate, such as the hydrocarbons of pentane, hexane, etc., halogenated hydrocarbons such as methylene chloride, trichlorofluoromethane, dichlorodifluoromethane, etc., or an inert gas, such as nitrogen, argon, etc.

The composite molded articles of this invention can be used as automobile parts, electrical parts, construction panels, etc.

The following examples will show one skilled in the art how to operate within the scope of the present invention and are not intended to serve as a limitation on the scope thereof. In these examples, all parts are parts by weight and all percentages are percentages by weight unless otherwise indicated.

## Example 1

Polyethylene spacers (20 mm diameter and 5 mm height) were bonded to the top and bottom corners of a veneer (lauan) measuring 200 mm x 200 mm x 3 mm. The entire core element component was wrapped with a polyethylene film (Rosewrap; 15 μm thickness, Tokyo Sankei Kogyo Co.) and then vacuum sealed so that the polyethylene film conformed to the configuration of the core element. The core element was then placed in a stainless steel mold having a cavity size of 270 mm x 270 mm x 14 mm.

Separately, a solution consisting of 100 parts dicyclopentadiene (DCP) and 6.5 parts styrene-isoprene-styrene block copolymer (SIS; Quintac 3421, Nippon Zeon Co.) was placed into two separate containers. Into one container diethylaluminum chloride (DEAC), n-propyl alcohol, and silicon tetrachloride (based on DCP) were added to give 41 mmole, 41 mmole, and 21 mmole concentrations, respectively. Into the other container, tri(tridecyl)-ammonium molybdate was added to give a 10 mmole concentration (based on DCP), and then a 4 parts of phenolic antioxidant (Ethanox 702, Ethyl Corp.) were added per 100 parts of DCP (reactant solution B).

Both reactant solutions were mixed in a 1:1 mixing ratio in a power mixer and the resultant mixing ratio 1:1 reactive solution was rapidly pumped into the mold cavity (preheated to 70°C) under atmospheric pressure by a gear pump.

Following the polymerization reaction, the mold was opened and the composite product was removed and cooled to room temperature.

The integrally molded composite product was cut into cross section and inspected. The poly-(DCP) was bonded to the veneer sheet via the polyethylene film, and no unreacted monomer was observed.

A core element without the polyethylene film wrap was molded in a similar fashion, cut in cross section, and observed. The interface of the poly-(DCP) resin layer and the core element was sticky because of the unreacted monomer. The poly-(DCP) matrix was easily separated from the unwrapped core element.

**Example 2**

A polyurethane foam solution (Adeka Foam Mix, Asahi Denka Co.) was molded into a core element measuring 150 mm x 150 mm x 10 mm (density: 0.1 g/cm$^3$). Four spacer elements were bonded to the top and bottom corners of the core component and then the entire surface was wrapped with a polyethylene film. It was then placed in a mold having a cavity size of 200 mm x 200 mm x 20 mm size and processed according to the procedure of Example 1.

After injecting the reaction solution, the mold was opened to retrieve the composite. No unpolymerized areas were observed at the interface of the poly(DCP) matrix/core component interface.

A polyurethane foam without polyethylene film wrapping was also used to manufacture a composite molded product. The interface of the polyurethane foam/poly(DCP) matrix was sticky and an unreacted monomer odor was observed.

**Claims**

1. An integrally molded composite article comprising a polymer matrix and at least one lamina component, said polymer matrix comprising a ring-opened norbornene polymer that is bulk polymerized from at least one norbornene-type monomer in contact with a surface of the lamina component, wherein the lamina component surface(s) that is in contact with said norbornene monomer is covered with an inert polymer film that does not interfere with the polymerization reaction and wherein an adherent bond is formed between the film covered lamina component surface and the polymer matrix so formed.

2. The article of claim 1 wherein the inert film comprises a polymer selected from the group consisting of polyethylene, ethylene-propylene copolymer, ethylene-butene-1 copolymer, polypropylene, polybutene-1, polypentene-1, poly(4-methylpentene-1), polystyrene, styrene-maleic anhydride copolymer, ethylene-propylene-diene terpolymer, ethylene-vinyl acetate copolymer, ethylene-acrylic acid ester copolymer, polyvinyl acetate, polymethyl methacrylate, polyhexyl methacrylate, block copolymers of styrene-isoprene, styrene-butadiene, styrene-butadiene-styrene, styrene-isoprene-styrene, and styrene-isoprene-styrene-isoprene-styrene, vulcanized rubber selected from the group consisting of ethylene-propylene rubber, ethylene-propylene-diene terpolymer, polybutadiene, polyisoprene, styrene-butadiene, chloroprene rubber, and butyl rubber; and mixtures of the foregoing polymers.

3. The article of claim 2 wherein the lamina component is completely embedded in the polynorbornene matrix.

4. The article of claims 1, 2, or 3 wherein the lamina component is derived from compositions selected from polymeric materials, glass, metal, ceramics, and combinations thereof.

5. The article of claim 2 or 4 wherein the lamina component is in the form of a sheet, plate, rod, foam, or bead.

6. The article of claim 2 wherein an adhesive is applied between the inert film and lamina.

7. The article of claim 1 wherein the norbornene monomer is selected from the group consisting of bicyclic monomers, tricyclic monomers, tetracyclic monomers, pentacyclic monomers, heptacyclic monomers, and mixtures thereof.

8. The article of claim 7 wherein the norbornene monomer is selected from the group consisting of norbornene, norbornadiene, dicyclopentadiene, dihydrodicyclopentadiene, tetracyclododecene, tricyclopentadiene, tetracyclopentadiene, including the alkyl, alkenyl, alkylidenyl, and aryl substituents thereof.

9. A process for producing an integrally molded composite article comprising a polymer matrix and at least one lamina component, said method comprising providing a mold with at least one lamina component disposed therein; wherein said lamina component has an inert polymer film covering at least a surface thereof feeding a bulk polymerizable liquid reaction solution comprising at least one norbornene monomer, a metathesis catalyst and a cocatalyst into said mold wherein said reaction solution is in contact with the portion of the lamina component that is covered with the inert film; and polymerizing said norbornene monomer forming a ring-opened polynorbornene matrix with an adherent lamina component.

10. The process of claim 9 wherein the inert film comprises a polymer selected from the group consisting of polyethylene, ethylene-propylene copolymer, ethylene-butene-1 copolymer, polypropylene, polybutene-1, polypentene-1, poly(4-methylpentene-1), polystyrene, styrene-maleic anhydride copolymer, ethylene-propylene-diene terpolymer, ethylene-vinyl acetate copolymer, ethylene-acrylic acid ester copolymer, polyvinyl acetate, polymethyl methacrylate, polyhexyl methacrylate, block copolymers of styrene-isoprene, styrene-butadiene, styrene-butadiene-styrene, styrene-isoprene-styrene, and styrene-isoprene-styrene-isoprene-styrene, vulcanized rubber selected from the group consisting of ethylene-propylene rubber, ethylene-propylene-diene, polybutadiene, polyisoprene, styrene-butadiene, chloroprene rubber, and butyl rubber; and mixtures of the foregoing polymers.

11. The process of claim 10 wherein the inert polymer film is affixed to the lamina component by a method selected from the group consisting of adhesive means, wrapping, vacuum sealing means, applying heat shrinkable film, and thermal fusion.

12. The process of claim 9 wherein the lamina component is derived from compositions selected from the group consisting of polymeric materials, glass, metal, ceramics, and combinations thereof.

13. The process of claim 12 wherein the lamina component is in the form of a sheet, plate, rod, foam, or bead.

14. The process of claim 9 wherein the norbornene monomer is selected from the group consisting of bicyclic monomers, tricyclic monomers, tetracyclic monomers, pentacyclic monomers, heptacyclic monomers, and mixtures thereof.

15. The process of claim 14 wherein the norbornene monomer is selected from the group consisting of norbornene, norbornadiene, dicyclopentadiene, dihydrodicyclopentadiene, tetracyclododecene, tricyclopentadiene, tetracyclopentadiene, including the alkyl, alkenyl, alkylidenyl, and aryl substituents thereof.